# EUROPEAN PATENT SPECIFICATION

(11) **EP 0 966 887 B1**
(45) Date of publication and mention of the grant of the patent: **09.04.2003**
(21) Application number: 99112119.5
(22) Date of filing: 23.06.1999
(51) Int. Cl.: A23J 3/08, A23L 1/317, A23L 1/325, A23G 9/00, A23C 9/13

(54) **Cheese whey protein having improved texture, process for producing the same und use thereof**
Käsemolkeprotein mit verbesserter Textur, Verfahren zur Herstellung und Verwendung
Protéine de lactosérum de fromagerie à texture améliorée, méthode de préparation et son utilisation

(30) Priority: 24.06.1998 JP 17698898
(43) Date of publication of application: 29.12.1999
(73) Proprietor: Ajinomoto Co., Inc., Tokyo 104 (JP)
(72) Inventor: Soeda, Takahiko, c/o Food Research & Devel. Lab., Kanagawa-ken (JP)
(74) Representative: Strehl Schübel-Hopf & Partner

(56) References cited:
- EP-A- 0 821 881
- ABOUMAHMOUD R AND P SAVELLO: "Crosslinking of whey protein by transglutaminase" JOURNAL OF DAIRY SCIENCE, vol. 73, no. 2, 1990, pages 256-263, XP002120051 Dep. of Nutr. & Food Sci., Utah State Univ., Logan, UT 84322-8700, USA
- PATENT ABSTRACTS OF JAPAN vol. 015, no. 392 (C-0873), 4 October 1991 (1991-10-04) & JP 03 160957 A (AJINOMOTO CO INC), 10 July 1991 (1991-07-10)
- PATENT ABSTRACTS OF JAPAN vol. 012, no. 202 (C-503), 10 June 1988 (1988-06-10) & JP 63 005100 A (MEIJI MILK PROD CO LTD), 11 January 1988 (1988-01-11)

## Description

### Detailed Description of the Invention

### Technical Field

The present invention relates to a novel cheese whey protein having improved texture, a process for producing the same, for example, a process for producing a cheese whey protein-containing powder, which comprises the steps of at least partially denaturing cheese whey protein and reacting the partially denatured cheese whey protein with a transglutaminase, thereafter heating the resulting solution at a high temperature, and then drying the reaction product, and its use in a food.

This modified whey protein is used in the field of processed foods such as poultry, meat and fish processed products, dairy products and egg products that require gelation capability, emulsifiability and foamability, beverages and health foods.

### Background Arts

A cheese whey protein is a by-product in the production of cheese. Attempts of recovering proteins contained in whey and using the same as food materials have been long studied in countries where dairy farming of cheese and the like is flourishing for the purpose of environmental preservation and effective use of resources.

With respect to the conventional production of cheese whey proteins, the protein content in cheese whey concentrate obtained through ultrafiltration was between 50 and 70%. In recent years, however, isolated whey protein having the protein content of 90% or more has been increasingly produced to improve gelation capability, emulsifiability and foamability of the protein.

Meanwhile, in recent years, in view of the effective use of natural resources, attempts have been made to directly use ingredients of the cheese whey, such as proteins, saccharides and minerals in foods without processing the cheese whey as much as possible. Then, studies have been started worldwide concerning the use as a food material of a milk whey protein concentrate having a lower protein content of, for example, approximately 30%, than as usual.

When the cheese whey protein discharged as a by-product was used in various foods, the foods using the cheese whey protein were not preferable because of the bad feeling during swallowing. The bad texture, such as a rough feeling or a bad feeling during swallowing is not common to all ingredients of milk proteins. For example, it is not observed in caseins as main components of the milk protein. This is a peculiar problem associated with the cheese whey protein.

With respect to the problem of improving texture of this cheese whey protein, such as a bad feeling during swallowing or a rough feeling, a technique of hydrolysis with various enzymes has been generally employed. When hydrolysis is conducted by enzymes, there is a problem that gelation capability, one of properties of a protein, is decreased, and functions of the whey protein cannot fully be exhibited.

For example, an unmodified whey protein powder is directly contacted with superheated steam of from 110 to 130°C for from 10 to 20 seconds, thereby improving a gel strength of a heated gel and decreasing the number of bacteria (refer to JP-B-7-108191). This method is effective for decreasing the number of bacteria, but a problem of texture such as a bad feeling during swallowing or a rough feeling owing to the heating, even for a short time, still remains.

Further, it is reported that when a whey protein is partially denatured (degree of denaturation, between 55 and 80%) to produce a powder having an average particle diameter of from 40 to 50 µm, it is used as an additive having an excellent organoleptic property in a food, for example, a cold emulsion such as mayonnaise, a salad source or an ice cream (refer to JP-W-7-507452). However, the problem with the delicate feeling of the final product in the mouth is not completely resolved. Thus, the use thereof is limited.

In consideration of the fact that industrial heat sterilization is generally conducted at a high temperature for a short period of time for inhibiting denaturation of proteins, insolubilization of proteins through heating at 100°C or more is important. In general, the change of proteins varies greatly through heating at 100°C or more. From this standpoint, there is no information on insolubilization of proteins at 100°C or more in relation to the cheese whey.

Aboumahmoud R. and P. Savello, Journal of Dairy Science 1990, p. 256-263 discloses the crosslinking of whey protein by transglutaminase at various pH values or after heat treatment.

EP-A-0 821 881 discloses a process of reacting transglutaminase with whey protein and then heating the obtained modified protein.

### Problems to Be Solved by the Invention

The development of cheese whey protein and foods containing the same which can solve the serious problems of the bad feeling during swallowing and the rough feeling, namely which can improve texture when using the cheese whey protein has been in demand. In milk whey proteins, such problems are more conspicuous in cheese whey, a by-product in the production of cheese than in casein whey, a by-product in the production of caseins. Further, in this connection, when sodium chloride ordinarily used in foods is added to the cheese whey protein, a heated gel prepared from this cheese whey protein loses cohesiveness and water holding capacity, and has a feeling in chewing as if dry fibers were chewed. This is a serious problem in widening the use range of this material in foods.

It is an object of the invention to provide a process for producing cheese whey protein which is improved in the above-mentioned physical properties, especially in texture, the cheese whey protein, and a food containing or using the same.

### Means For Solving the Problems

The inventors have assiduously conducted investigations to solve the problems, and have consequently found that in order to solve the problems, cheese whey protein, especially, a composition containing the cheese whey protein is reacted with transglutaminase and conditions for the at least partial denaturation of the cheese whey protein are adjusted, in particular, the heat treatment and the pH adjustment are appropriately combined, especially, the pH adjustment and the preheat treatment are conducted in the previous stage, with the result that even when the product is later heated at 100°C or more, a gel obtained from the treated cheese whey protein or the food using the same can have an excellent texture such as an excellent feeling during swallowing without a rough feeling and maintain properties such as emulsifiability, foamability and water holding capacity at high levels. These findings have led to the completion of the invention.

The present invention relates to a process for modifying cheese whey protein comprising the steps of
(a) at least partially denaturing cheese whey protein under an increased temperature and an alkaline condition and
(b) reacting the at least partially denatured cheese whey protein with a transglutaminase.

The following combination of steps (a) and (b) is preferred:
(a) subjecting the cheese whey protein to alkali treatment and preheat treatment, for example, heat treatment at 80°C at the highest prior to the reaction of the cheese whey protein with the transglutaminase; and/or
(b) reacting the cheese whey protein with the transglutaminase under an alkaline condition and/or while heating at a temperature that does not inactivate the transglutaminase.
Steps (a) and (b) are also referred to as steps 1 and 2, respectively, in the following.

Further physical or chemical treatment other than the above-mentioned treatments is also included in the invention unless the object of the invention is impaired.

The at least partial denaturation of the cheese whey protein enables transglutaminase to crosslink its substrate, i.e. cheese whey protein, having a three dimensional structure that is different from its structure under native conditions, thereby producing a modified cheese whey protein having advantageous properties.

The following contents are also included in the invention.
[1] A process for producing a modified cheese whey protein, including a step of reacting a cheese whey protein with a transglutaminase, which comprises
   (a) a step 1 of conducting alkali treatment and preheat treatment (for example, heat treatment at 80°C at the highest) prior to the reaction with the transglutaminase; and
   (b) a step 2 of reacting the cheese whey protein with the transglutaminase under an alkaline condition and/or while heating at a temperature that does not inactivate the transglutaminase.

   It is preferred to conduct the alkali treatment and the preheat treatment in the step 1 at the same time, though these may be conducted separately. Likewise, when the cheese whey protein may be reacted with the transglutaminase under an alkaline condition and reacted separately while heating in the step 2, it is advisable to conduct the reaction with the transglutaminase under an alkaline condition while heating simultaneously. Further, when the step 2 is conducted, it is advisable to maintain the alkaline condition from the preheat treatment and successively conduct the reaction with the transglutaminase through heating in the step 2, whereby a better treated whey protein is obtained.
   Since the transglutaminase loses the activity at too high a temperature, a temperature, for example, 60°C or less, is employed. Sufficient effects are provided even in the reaction at room temperature.
   As stated above, the alkali treatment and the preheat treatment can be conducted simultaneously. Also when the steps 1 and 2 are conducted, it is most preferable that the alkali treatment in the step 1 is successively conducted and the transglutaminase is reacted by being heated as required.
[2] The process wherein the amount of the transglutaminase is between 0.1 and 100 units per gram of the protein contained.
[3] The process wherein the pH in the alkali treatment and/or under the alkaline condition is between 7 and 9.
[4] The process which further contains a step of, after the reaction with the transglutaminase, heating and then drying the reaction product.
   In the drying, heat treatment at a high temperature can also be conducted for sterilization.
[5] The process wherein the preheat treatment in the step 1 is conducted at from 50 to 80°C.

### Mode for Carrying out the Invention

The invention is specifically described below.

The cheese whey protein to be modified or a composition containing the same which is used as a starting material in the invention contains a whey protein obtained as a by-product in the production of cheese using milk as a raw material. Main components thereof in the solid are proteins and lactose. With respect to the cheese whey protein commonly used as the starting material of the invention, a standard composition in the form of a protein-containing solution is preferably a composition comprising 94.5% of water, approximately 0.5% of protein, approximately 4.5% of saccharides, 0.5% of ash and a trace amount of fat, or a concentrate obtained by concentrating it to from approximately 2 to 10 times through ultrafiltration. Further, a cheese whey protein-containing solution is also available which is obtained by using a commercial cheese whey protein-containing powder having a protein content of 30% or more and adding water thereto until the protein content becomes 10% or less.

Transglutaminases are divided into calcium-independent and calcium-dependent types. Either can be used in the present invention. Examples of the former include those derived from microorganisms such as Actinomycetes, Bacillus subtilis and the like (see, for example, JP-A-64-27471). Examples of the latter include those derived from guinea pig liver (see, for example, JP-B-1-50382), those derived from microorganisms such as Oomycetes, those derived from animals such as bovine blood, swine blood and the like, those derived from fishes such as salmon, red sea bream and the like (see, for example, Seki Nobuo et al., Nippon Suisan Gakkaishi, vol.56, NO.1, pp.125-132(1990)), those derived from oyster, and so forth. Also, those produced by methods of genetic engineering (see, for example, JP-A-1-300889, JP-A-6-225775, JP-A-7-23737) can be mentioned. In accordance with the present invention, any of these transglutaminases can be used, with no specific limitation on the origin and the preparation. However, in view of the function and the economics in the food applications, the calcium-independent transglutaminases are preferable. For example, the transglutaminases derived from the microorganisms (JP-A-64-27471 mentioned above) meet any conditions, and are preferred enzymes.

Transglutaminases which will be developed and found in future can also be used in the invention so long as they have the transglutaminase activity. The use thereof is included in the present invention as a matter of course.

For example, an actual treatment method is described below.

A cheese whey protein-containing solution having a protein content of from 0.5 to 10% is first subjected to alkali treatment (pH adjustment) and preheat treatment. In the alkali treatment (pH adjustment), the pH value is between 7 and 9. A hydroxide, a carbonate, a phosphate or the like is used as a pH adjusting agent (neutralizing agent), and the pH adjusting agent (neutralizing agent) used is not particularly limited. The preheat treatment is preferably conducted after the pH adjustment. With respect to the conditions thereof, the temperature is preferably at most 80°C, usually between 50 and 80°C and the time is preferably between 10 seconds and 120 minutes. With respect to the method, when the heat treatment is conducted at a high temperature for a short period of time, for example, 5 minutes or less, a high-temperature instantaneous heater fitted with a heat exchange plate can be used. With respect to the preheat treatment for a long period of time, it can be conducted batchwise using a tank. The method is selected depending on the preheat treatment conditions employed. Either the pH adjustment or the preheat treatment may be conducted earlier. The pH adjustment may be conducted after the preheat treatment. However, this method is slightly undesirous because the pH adjustment becomes intricate owing to the difference in the solution temperature. In view of the protein modification, either thereof may be conducted earlier.

The cheese whey protein-containing solution which has been subjected to the pH adjustment and the preheat treatment is then treated with the transglutaminase. The amount of the transglutaminase is between 0.1 and 100 units, preferably between 0.5 and 50 units per gram of the protein. When it is less than 0.1 units, the heat-aggregation is unchanged, and the texture such as a rough feeling or the like cannot be improved in comparison with the transglutaminase-free substance. Further, when it is more than 100 units, the effect is fixed, and no longer increased. Thus, the addition in an amount of more than 100 units is economically disadvantageous.

The reaction with the transglutaminase in the invention is preferably conducted under an alkaline condition. When the pH adjustment is previously conducted as in the invention, it is quite convenient that the solution with the pH adjusted is used as such to maintain the pH value.

With respect to the reaction conditions of the transglutaminase used in the invention, the reaction temperature is between 0 and 60°C, and the reaction time is between 5 minutes and 48 hours. At this time, the reaction time is appropriately selected depending on the reaction temperature and the effects expected. Accordingly, the preferable reaction conditions are that the reaction temperature is between 20 and 50°C and the reaction time is between 30 minutes and 2 hours.

In the heating at the temperature that does not inactivate the transglutaminase in the invention, the temperature is usually 60°C or less as mentioned above.

Subsequently, the cheese whey protein-containing solution treated with the transglutaminase is reneutralized as required. At this time, the pH value is generally adjusted to approximately a neutral region, namely, between approximately 6 and 7.5. In view of the use in foods, it is preferably 7 or less. As the pH adjusting agent (neutralizing agent), an aqueous solution of an inorganic or organic acid is used, and the type thereof is not particularly limited.

It is also possible that the pH value is adjusted to an alkali region according to the use form of the modified protein.

After the reneutralization, the protein-containing solution is heated at from 80 to 140°C for 1 second to 120 minutes. In the heating, the UHT method is generally employed, and the treatment is conducted at a high temperature for a short period of time. As a heating source, an indirect method in which steam is passed through a plate or a direct method in which steam is directly fed to a protein solution is employed.

In the invention, insolubilization of the protein by aggregation does not occur even through heating at 100°C or more.

After the heating, the product is dried. As a drying method, a spray-drying method is generally appropriate economically. In this method, a spray drier or a disk drier is used. In order to minimize heat denaturation of the protein, it is advisable to maintain especially an exhaust temperature in a drier at 80°C or less.

An actual cheese whey protein-containing powder can be produced through the above-mentioned steps in view of the number of bacteria and the protein properties in the invention.

By the way, the activity unit of the transglutaminase used in the invention is measured and defined as follows.

That is, the reaction is conducted using benzyloxycarbonyl-L-glutaminylglycine and hydroxylamine as substrates. The resulting hydroxamic acid is formed into an iron complex in the presence of trichloroacetic acid, and an absorbance of 525 nm is then measured. An amount of hydroxamic acid is found from a calibration curve, and the activity is calculated (refer to JP-A-64-27471).

The modified cheese whey protein as obtained according to the process of the invention can be used in various foods as such or by being further modified. These are all included in the invention.

Foods containing or using the modified cheese whey protein include gel-like foods, emulsified foods, bread, confectionery and other foods.

Examples of the gel-like foods include ham, sausage, kamaboko (boiled fish paste), chikuwa (cooked fish paste), satsumaage (fried fish paste), jelly, custard pudding, egg tofu, chawanmushi (pot-steamed hotchpotch) and noodles.

Examples of the emulsified foods include ice cream, yoghurt, cheese and lactic acid beverages.

Examples of bread and confectionery include bread, pastries, cookies and biscuits.

Examples of the other foods include mousse and chocolate.

As is understandable from the foregoing description, the cheese whey protein can widely be used, and it can be expected much also from the aspect of the use of the by-product given in the production of cheese.

### Examples

The invention is illustrated more specifically by referring to the following Examples and Comparative Examples. However, the invention is not limited thereto at all.

### (Example 1) Production of a modified cheese whey protein

A whey concentrate (protein content approximately 2%) obtained by concentrating a cheese whey solution discharged in the production of cheese by a general ultrafiltration method was adjusted to a pH of 8 with a sodium hydroxide aqueous solution (alkali treatment), and then preheated at 60°C for 15 minutes (preheat treatment). To this whey protein solution was added 1 unit, per gram of the protein, of a transglutaminase (supplied by Ajinomoto Co., Inc., specific activity 1,000 units/g) derived from microorganisms (Streptoverticillium mobaraense IFO 13819) belonging to the genus Streptoverticillium, actinomycetes. The mixture was maintained at 25°C for 60 minutes. The resulting mixture was adjusted to a pH of 7 with a hydrochloric acid aqueous solution, and concentrated to a protein content of approximately 20% in a usual manner using an ultrafilter. This concentrate was heated by being maintained at 110°C for 30 seconds according to a plate-system indirect steam heating method, then jetted into a cyclone held at reduced pressure of 600 mmHg, and rapidly cooled to 60°C. The product was spray-dried at approximately 160°C to obtain a cheese whey protein concentrate (hereinafter referred to as an "invention product"). For comparison, a cheese whey protein concentrate was produced in the same manner as the invention product except that the transglutaminase was directly used in a usual manner without conducting the alkali treatment and the preheat treatment (Comparative Example 1). Further, a cheese whey protein concentrate was produced in the same manner as the invention product except that the pH adjustment, the preheat treatment and the transglutaminase treatment were not conducted (Comparative Example 2). The results of evaluation of these products are shown in Table 1.

By the way, the gelation capability of the protein-containing powders was evaluated as follows.

### (1) Production of a gel

Water (85 g) and 3 g of sodium chloride were added to 15 g of the protein-containing powder, and these were mixed well using a spatula. The mixture was packed into a casing tube (folding width, 47 mm). Subsequently, the product was heated in hot water of 85°C for 30 minutes, and then cooled to room temperature with tap water to form a gel for evaluation.

### (2) Measurement of a gel strength

The gel was cut in round slices having a thickness of 15 mm, and the cut pieces were measured for the gel strength (kg) using a rheometer supplied by Fudo Kogyo K.K. with a spherical plunger having a diameter of 5 mm.

### (3) Water holding capacity of a gel

Each (approximately 4 g) of gel pieces obtained by cutting the gel in round slices having a thickness of from approximately 5 to 6 mm was held from both sides with a filter paper. A load of 2 kg was applied thereto for 30 seconds. The water holding capacity (%) was calculated from the difference in weight between the gel before the load application and the gel after the load application.

**Table 1**

| Sample | Gel strength (kg) | Water retention (%) | Comments |
|---|---|---|---|
| Invention product | 0.331 | 85.0 | very smooth with good feeling during swallowing |
| Comparative Example 1 | 0.254 | 55.3 | hard texture as if eating an aggregate of particles; a rough feeling and a bad feeling during swallowing; water separation occurs much. |
| Comparative Example 2 | 0.142 | 48.1 | feeling in chewing as if chewing paper; quite bad feeling during swallowing; no cohesiveness at all; water separation occurs very much. |

As is apparent from Table 1, the invention product is excellent in the gel strength and the water holding capacity in comparison with the control products, and is remarkably improved in texture. Thus, it can effectively be used as a food material.

### (Example 2) Production of a modified cheese whey protein

One hundred parts of a cheese whey protein concentrate powder (WPC, supplied by Kyodo Nyugyo K.K., protein content approximately 35%) were dissolved in 900 parts of water. The solution was adjusted to a pH of 7.5 with sodium carbonate (alkali treatment), and preheated at 80°C for 15 seconds (preheat treatment). Then, 5 units, per gram of the protein, of the same transglutaminase as that used in Example 1 were added thereto, and the mixture was maintained at 50°C for 30 minutes. This transglutaminase-treated solution was maintained at 120°C for 10 seconds by blowing hot steam using an ejector-like mixing tube to conduct heating, then jetted into a cyclone held at reduced pressure of 600 mmHg, and rapidly cooled to 60°C. The resulting mixture was spray-dried at approximately 160°C to obtain a cheese whey protein concentrate. This concentrate was then treated in the same manner as in Example 1. The resulting salt-added gel had quite a high water holding capacity of 81.6%, and was quite excellent in a feeling during swallowing and a feeling in chewing.

In comparison with the invention product, a cheese whey protein (Comparative Example 3) prepared through the reaction with the transglutaminase without conducting the pH adjustment and the preheat treatment had a poor water holding capacity and was not improved so much in texture such as a feeling during swallowing and a feeling in chewing. Thus, this protein was not desirable in comparison with the invention product.

### (Example 3) Production of a modified cheese whey protein (not belonging to the scope of the invention)

One hundred parts of a separated cheese whey protein (WPC, supplied by Nissei Kyoeki K.K., protein content 85%) were dissolved in 1,500 parts of water, and the solution was then adjusted to a pH of 9 with sodium hydroxide. Subsequently, 0.5 units, per gram of the protein, of the same transglutaminase (specific activity 1,000 units/g) as that used in Example 1 were added thereto, and the mixture was maintained at 50°C for 90 minutes. This solution was then neutralized to a pH of 7 with sodium hydroxide, maintained at 120°C for 10 seconds by blowing hot steam using an ejector-like mixing tube to conduct heating, thereafter jetted into a cyclone held at reduced pressure of 600 mmHg, and rapidly cooled to 60°C. The resulting mixture was spray-dried at approximately 160°C to obtain a cheese whey protein concentrate. This concentrate was then treated in the same manner as in Example 1. The resulting salt-added gel had a high water holding capacity of 83.8, and was quite excellent in a feeling during swallowing and a feeling in chewing.

Foods were prepared by the following methods using the invention product produced in Example 1, and evaluated. The properties of the cheese whey protein-containing powder according to the invention were thereby measured.

### (Example 4) Production of kamaboko

One thousand grams of a flaky paste obtained by flaking frozen on-ship surimi(fish paste) of Alaska pollack ("SA-grade Surimi", supplied by Maruha K.K.), 30 g of sodium chloride and 600 g of ice water were mixed well using a Stephan cutter. Subsequently, 50 g of potato starch ("Esusan Ginrei", supplied by Ajinomoto Co., Ltd.), 50 g of sugar, 20 g of sweet sake(mirin), 10 g of a seasoning powder and 30 g of the invention product obtained in Example 1 were added thereto, and then mixed at a final product temperature of 10°C or less using a Stephan cutter. The thus-obtained paste was packed into a casing tube, warmed at 30°C for 60 minutes for setting, then heated at 90°C for 30 minutes, and cooled to prepare casing kamaboko. The resulting kamaboko was subjected to the organoleptic evaluation. As a result, this kamaboko had a stiffness inherent in kamaboko, and was smooth with a good feeling during swallowing. Thus, it had texture peculiar to kamaboko.

### (Example 5) Production of sausage

One thousand grams of pork lean meat, 400 g of pork fat, 30 g of sodium chloride and 400 g of ice water were mixed well using a Stephan cutter. Subsequently, 50 g of a starch ("Esusan Ginrei", supplied by Ajinomoto Co., Inc.), 10 g of a seasoning powder and 30 g of the invention product obtained in Example 1 were added thereto, and these were mixed using a Stephan cutter such that a final product temperature reached 10°C. The thus-obtained meat paste was packed into edible casing tubes, dried in a smoking chamber at 60°C for 30 minutes, then smoked at the same temperature for 15 minutes, and finally cooked with steam at 80°C for 40 minutes. This was elastic with a good feeling in chewing and smooth with a good feeling during swallowing. Thus, it had texture peculiar to pork sausage.

### (Example 6) Production of an ice cream:

Eight-hundred grams of fresh cream, 310 g of milk, 480 g of whole eggs, 12 spoonfuls of sugar and 20 droplets of a vanilla essence were mixed well. To this aqueous mixture was added a solution obtained by dissolving 30 g of the invention product formed in Example 1 in 60 g of water. The resulting solution was allowed to stand overnight in a refrigerator, and the product temperature was decreased to 10°C or less. An inner pot of a home ice cream making machine ("Donbie", supplied by Nippon Keikinzoku K.K.) had been placed overnight in a refrigerator of -18°C or less for cooling in advance. The ice cream mix having the product temperature of 10°C or less was put into this pot, and the pot was closed. Subsequently, the handle of the machine was turned. After the handle was turned smoothly, it was turned intermittently. Finally, when the content was overrun up to the upper portion of the pot, the turning of the handle was stopped, and the ice cream was prepared. This product was smooth with an excellent feeling during swallowing. Thus, it had texture peculiar to an ice cream.

### (Example 7) Production of yoghurt

A whole milk powder (78 g), 76 g of a skim milk powder, 32 g of the invention product obtained in Example 1 and 1,820 g of water were charged into a 5-liter beaker, and dissolved well while being stirred. After this mixture was cooled to 45°C, 30 g of lactic acid bacteria starter ("Joghurt V2", supplied by Wiesby) were added thereto. The resulting mixture was fermented at 44°C. When the pH value reached 4.6 after about 3 hours of the fermentation, the fermented product was cooled to 10°C to obtain yoghurt. The thus-obtained yoghurt was smooth with a good feeling during swallowing. Thus, it had texture peculiar to yoghurt.

### Advantages of the Invention

In the invention, partially denaturing conditions, i.e. alkali treatment and preheating and the reaction with the enzyme with heating, are appropriately selected and conducted when reacting a cheese whey protein with a transglutaminase in the production stage. In the invention, the protein network structure of the cheese whey protein is rendered dense using crosslinking polymerization activity of transglutaminase that catalyzes intermolecular or intramolecular ε-(γ-Glu)Lys crosslinking between glutamine and lysine of a protein to impart a dissolution stability. The combination of pH adjustment and preheat treatment in the invention can provide a synergistic effect of further improving the activity of the transglutaminase. As a result, it is possible to improve the dissolution instability due to aggregation of the cheese whey protein, to improve texture of the solution or the gel of the whey protein, to find wide acceptance in various foods, and to use a cheese by-product formed in a large amount.

## Claims

1. A process for modifying cheese whey protein, comprising the steps of
(a) at least partially denaturing cheese whey protein under an increased temperature and an alkaline condition and
(b) reacting the at least partially denatured cheese whey protein with a transglutaminase.

2. The process according to claim 1, wherein the increased temperature is 50 to 80 °C.

3. The process according to any of the preceding claims, wherein step (b) is carried out under an alkaline condition.

4. The process according to any of the claims 1 to 3, wherein step (b) is carried out under an increased temperature.

5. The process according to any of the preceding claims, wherein step (b) is carried out under an increased temperature and an alkaline condition.

6. The process according to claim 3, wherein the pH under the alkaline condition is between 7 and 9.

7. The process according to any of the preceding claims, wherein step (b) is carried out under conditions that do not inactivate transglutaminase.

8. The process according to any of the preceding claims, wherein step (a) is carried out prior to step (b).

9. The process according to any of the preceding claims, wherein step (a) is carried out under an alkaline condition and an increased temperature and subsequently, step (b) is carried out under an alkaline condition and an increased temperature that does not inactivate the transglutaminase.

10. The process according to any of the preceding claims, which additionally comprises, after the reaction with the transglutaminase, inactivating the transglutaminase.

11. The process according to claim 10, wherein the transglutaminase is inactivated by heating the reaction product.

12. The process according to claim 11, wherein the inactivation temperature is 80 °C or more.

13. The process according to any of the claims 10 to 12, wherein the reaction product is dried after the inactivation step.

## Patentansprüche

1. Verfahren zum Modifizieren von Käsemolkeprotein, welches die Stufen umfaßt, bei denen
(a) Käsemolkeprotein zumindest teilweise unter einer erhöhten Temperatur und einer alkalischen Bedingung denaturiert wird und
(b) das zumindest teilweise denaturierte Käsemolkeprotein mit einer Transglutaminase umgesetzt wird.

2. Verfahren nach Anspruch 1, wobei die erhöhte Temperatur 50 bis 80°C ist.

3. Verfahren nach einem der vorstehenden Ansprüche, wobei Stufe (b) unter einer alkalischen Bedingung durchgeführt wird.

4. Verfahren nach einem der Ansprüche 1 bis 3, wobei Stufe (b) unter einer erhöhten Temperatur durchgeführt wird.

5. Verfahren nach einem der vorstehenden Ansprüche, wobei Stufe (b) unter einer erhöhten Temperatur und einer alkalischen Bedingung durchgeführt wird.

6. Verfahren nach Anspruch 3, wobei der pH-Wert der alkalischen Bedingung zwischen 7 und 9 ist.

7. Verfahren nach einem der vorstehenden Ansprüche, wobei Stufe (b) unter Bedingungen durchgeführt wird, bei denen Transglutaminase nicht inaktiviert wird.

8. Verfahren nach einem der vorstehenden Ansprüche, wobei Stufe (a) vor Stufe (b) durchgeführt wird.

9. Verfahren nach einem der vorstehenden Ansprüche, wobei Stufe (a) unter einer alkalischen Bedingung und einer erhöhten Temperatur durchgeführt wird und danach Stufe (b) unter einer alkalischen Bedingung und einer erhöhten Temperatur durchgeführt wird, so daß die Transglutaminase nicht inaktiviert wird.

10. Verfahren nach einem der vorstehenden Ansprüche, welches zusätzlich das Inaktivieren der Transglutaminase nach dem Umsetzen mit der Transglutaminase umfaßt.

11. Verfahren nach Anspruch 10, wobei die Transglutaminase durch Erhitzen des Umsetzungsprodukts inaktiviert wird.

12. Verfahren nach Anspruch 11, wobei die Inaktivierungstemperatur 80°C oder höher ist.

13. Verfahren nach einem der Ansprüche 10 bis 12, wobei das Umsetzungsprodukt nach der Inaktivierungsstufe getrocknet wird.

## Revendications

1. Un procédé pour modifier la protéine de lactosérum de fromagerie, qui comporte les étapes de
(a) dénaturer au moins partiellement la protéine de lactosérum de fromagerie sous une température accrue et dans un milieu alcalin et
(b) faire réagir la protéine de lactosérum de fromagerie au moins partiellement dénaturée avec un transglutaminase.

2. Le procédé selon la revendication 1, dans lequel la température accrue se situe entre 50 et 80°C.

3. Le procédé selon n'importe laquelle des revendications précédentes, dans lequel l'étape (b) est effectuée dans un milieu alcalin.

4. Le procédé selon n'importe laquelle des revendications 1 à 3 dans lequel l'étape (b) est effectuée sous une température accrue.

5. Le procédé selon n'importe laquelle des revendications précédentes, dans lequel l'étape (b) est effectuée sous une température accrue et dans un milieu alcalin.

6. Le procédé selon la revendication 3, dans lequel le pH du milieu alcalin est compris entre 7 et 9.

7. Le procédé selon n'importe laquelle des revendications précédentes dans lequel l'étape (b) est effectuée dans des conditions qui n'inactivent pas le transglutaminase.

8. Le procédé selon n'importe laquelle des revendications précédentes et dans lequel l'étape (a) est effectuée avant l'étape (b).

9. Le procédé selon n'importe laquelle des revendications précédentes, dans lequel l'étape (a) est effectuée dans un milieu alcalin et en élevant la température et ensuite, l'étape (b) est effectuée dans un milieu alcalin et sous une température accrue qui n'inactive pas le transglutaminase.

10. Le procédé selon n'importe laquelle des revendications précédentes, qui comporte de plus, après la réaction avec le transgultaminase, l'inactivation du transglutaminase.

11. Le procédé selon la revendication 10, dans lequel le transglutaminase est inactivé en chauffant le produit de la réaction.

12. Le procédé selon la revendication 11, dans lequel la température d'inactivation est de 80°C ou plus.

13. Le procédé selon n'importe laquelle des revendications 10 à 12, dans lequel le produit de la réaction est séché après l'étape de l'inactivation.
